# EUROPÄISCHE PATENTSCHRIFT

(11) **EP 0 645 703 B1**
(45) Veröffentlichungstag und Bekanntmachung des Hinweises auf die Patenterteilung: **28.11.2001**
(21) Anmeldenummer: 94114452.9
(22) Anmeldetag: 14.09.1994
(51) Int. Cl.: G06F 11/00, G06F 11/22

(54) **Verfahren zur Überprüfung der ordnungsgemässen Anschaltung integrierter Schaltungsbausteine**
Method for checking the proper coupling of integrated circuit modules
Procédé de vérification du raccordement correct de modules de circuits intégrés

(30) Priorität: 29.09.1993 DE 4333337
(43) Veröffentlichungstag der Anmeldung: 29.03.1995
(73) Patentinhaber: SIEMENS AKTIENGESELLSCHAFT, 80333 München (DE)
(72) Erfinder: Troost, Marcel-Abraham, Dipl.-Ing., D-81477 München (DE); Unterreitmayer, Hans-Jürgen, Dipl.-Ing., D-80333 München (DE)

(56) Entgegenhaltungen:
- GB-A- 2 202 062
- PATENT ABSTRACTS OF JAPAN vol. 010, no. 288 (P-502), 30.September 1986 & JP 61 105659 A (OKI ELECTRIC IND CO LTD), 23.Mai 1986,
- PATENT ABSTRACTS OF JAPAN vol. 006, no. 062 (P-111), 21.April 1982 & JP 57 003121 A (OMRON TATEISI ELECTRONICS CO), 8.Januar 1982,

## Beschreibung

Die Erfindung bezieht sich auf ein Verfahren zur Überprüfung der ordnungsgemäßen Anschaltung integrierter Schaltungsbausteine sowie von jeweils eine Mehrzahl solcher Schaltungsbausteine zusammenfassenden Baugruppen an eine Schnittstelle, zu der ein Datenbus, über den für Bestandteile der Bausteine und Baugruppen bestimmte Adressen, Daten und Befehle geschrieben und gelesen werden können, sowie Anschlüsse für die Spannungsversorgung gehören, wobei in an dem Datenbus angeschlossene bausteinindividuelle Schreib-/ Lese-Register, die bei Zur Herbeiführung von definierten Anfangsbetriebszuständen vorgenommenen Bertriebsspannungsabsentungen mit Bits des einen Binärwerts (0) beschrieben werden, und an deren Schnittstellenanschlüssen bei fehlender Anschaltung des jeweils zugehörigen Bausteins Bits des anderen Binärwerts (1) entsprechende Spannungsverhältnisse herrschen, Adressen der jeweiligen Baugruppe und Adressen des jeweiligen Bausteins geschrieben werden und wobei die Inhalte der betreffenden Schreib-/Lese-Register abgefragt und auf Übereinstimmung mit der jeweils erwarteten Adresse bzw. auf das Auftreten von ausschließlich Bits desselben Binärwerts (0, 1)überwacht werden.

Bei den genannten Bausteinen kann es sich beispielsweise um kundenspezifische Bausteine handeln, die einen Raumstufenteil oder einen Zeitstufenteil des Koppelnetzes einer digitalen Vermittlungsstelle bilden.

In diesem Fall bedienen die einzelnen Bausteine jeweils eine Mehrzahl von Multiplexleitungen bzw. Multiplexzwischenleitungen, so dass der Ausfall eines solchen Bausteines, sei es, dass er überhaupt nicht vorhanden ist, sei es, dass er durch mangelhafte Kontaktgabe der Anschlußelemente unwirksam ist, oder sei es, dass er in sonstiger Weise defekt ist, die Funktionsfähigkeit der Gesamtanordnung, hier also des Koppelfeldes, empfindlich stört.

Insbesondere bei einer solchen Anwendung werden bei Abgabe eines Rückstellsignals bzw. Resets zur Herstellung eines definierten Anfangszustandes die verschiedenen Zwecken dienenden Register der Bausteine in einen Zustand gebracht, in dem sämtliche der in ihnen enthaltenen Datenbits denselben Binärwert, vorzugsweise den Binärwert 0 aufweisen. Solche Resets werden dadurch herbeigeführt, dass vorübergehend die Betriebsspannung für den Baustein auf einen niedrigen Wert abgesenkt wird.

Da solche Spannungsabsenkungen fehlerbedingt auch während des laufenden Betriebs vorkommen können, entsprechen die Inhalte solcher Register gegebenenfalls nicht zu jedem Zeitpunkt den gezielt vorgenommenen Einträgen, ohne dass dies ohne weiteres erkannt werden kann.

Es ist nun auch schon bekannt (GB 2 202 062 A), ein aus einer Mehrzahl von Bausteinen und solche Bausteine umfassenden Baugruppen bestehendes System daraufhin zu überprüfen, ob die einzelnen Baugruppen bzw. diese enthaltenden Schaltungsplatinen an den für ihre Aufnahme jeweils vorgesehenen Steckplätzen gesteckt sind. Dazu wird ein Datenspeicher verwendet, in welchem eine Konfigurationsabbildung bezüglich des Systems festlegende Daten gespeichert ist. Mittels einer Prozessoreinrichtung werden diese Daten mit die einzelnen Schaltungsplatinen bzw. Baugruppen bezeichnenden Identifizierungsdaten bzw. -adressen verglichen, um durch diesen Vergleich zu ermitteln, ob die jeweilige Schaltungsplatine bzw. Baugruppe vorhanden ist bzw. an dem für sie vorgesehenen Steckplatz gesteckt ist oder nicht. Die betreffenden Steckplätze des Systems sowie der erwähnte Datenspeicher und die Prozessoreinrichtung sind dabei über ein Busleitungssystem miteinander verbunden. Dabei wird der Umstand, dass eine Schaltungsplatine bzw. Baugruppe überhaupt nicht gesteckt ist, an dem für die Aufnahme der betreffenden Schaltungsplatine bzw. Baugruppe vorgesehenen Steckplatz dadurch angegeben, dass dort als Adresse eine lediglich aus Binärsignalen "1" bestehende Adresse verfügbar ist.

Im Zusammenhang mit diesem bekannten Prüfverfahren sind allerdings keinerlei konkrete Maßnahmen dahingehend angesprochen, wie im Falle der Herbeiführung von definierten Anfangsbetriebszuständen durch sogenannte Resets vorzugehen ist und wie der Fall zu berücksichtigen ist, dass eine Adresse einer Schaltungsplatine bzw. Baugruppe dieselbe Bitfolge aufweist, die an einem Steckplatz des Systems auftritt, in den gerade keine Schaltungsplatine bzw. Baugruppe gesteckt ist.

Der Erfindung liegt daher die Aufgabe zugrunde, ein Verfahren der eingangs genannten Art so weiterzubilden, dass auf relativ einfache Art und Weise sowohl die Herbeiführung von definierten Anfangsbetriebszuständen durch sogenannte Resets bei den einzelnen Bausteinen bzw. Baugruppen ermittelt werden kann als auch sichergestellt wird, dass durch die Adressen der betreffenden Bausteine bzw. Baugruppen insgesamt nicht ein solcher Adressenzustand dargestellt wird, der an einem Steckplatz bzw. an der genannten Schnittstelle dem Nichtvorhandensein eines Schaltungsbausteins bzw. einer Baugruppe entspricht.

Gelöst wird die vorstehend aufgezeigte Aufgabe bei einem Verfahren der eingangs genannten Art erfindungsgemäß dadurch, dass in die genannten Schreib-/Lese-Register das Einschreiben einer der beiden genannten, jeweils eine Gesamtadresse bildenden Adressen in invertierter Form geschieht und dabei die Bereitstellung einer solchen, lediglich aus Bits des genannten anderen Binärwerts (1) bestehenden Gesamtadresse vermieden wird.

Die Erfindung bringt den Vorteil mit sich, dass auf besonders einfache Weise sichergestellt ist, dass sowohl das Vorliegen von definierten Anfangsbetriebszuständen durch sogenannte Resets ermittelt als auch zugleich sichergestellt werden kann, dass durch die in die bausteinindividuellen Schreib-/ Lese-Register eingeschriebenen jeweiligen Baustein- und Baugruppenadressen nicht eine solche Adresse entsteht, die einer fehlenden Anschaltung eines solchen Bausteins bzw. einer solchen Baugruppe entspricht. Darüber hinaus bringt die Erfindung den Vorteil mit sich, dass sich auch die zur Adressierung eines ersten vorgesehenen Bausteins und einer ersten vorgesehenen Baugruppe eines Systems üblicherweise verwendeten 0-Adressen verwenden lassen, die lediglich aus Bits des genannten einen Binärwerts (0) bestehen.

Anhand von Zeichnungen wird die Erfindung nachstehend an einem Ausführungsbeispiel näher erläutert.
In der Zeichnung zeigen
- Fig. 1: ein Blockschaltbild eines Koppelnetzes einer digitalen Vermittlungsstelle mit einem Raumkoppelfeld, bei dem eine Mehrzahl von Schaltungsbausteinen zu einer Baugruppe zusammengefaßt ist, und
- Fig. 2: eine mehr ins einzelne gehende Darstellung eines solchen Bausteins im Hinblick auf eine Durchführung des erfindungsgemäßen Verfahrens erforderlicher Ausstattung.

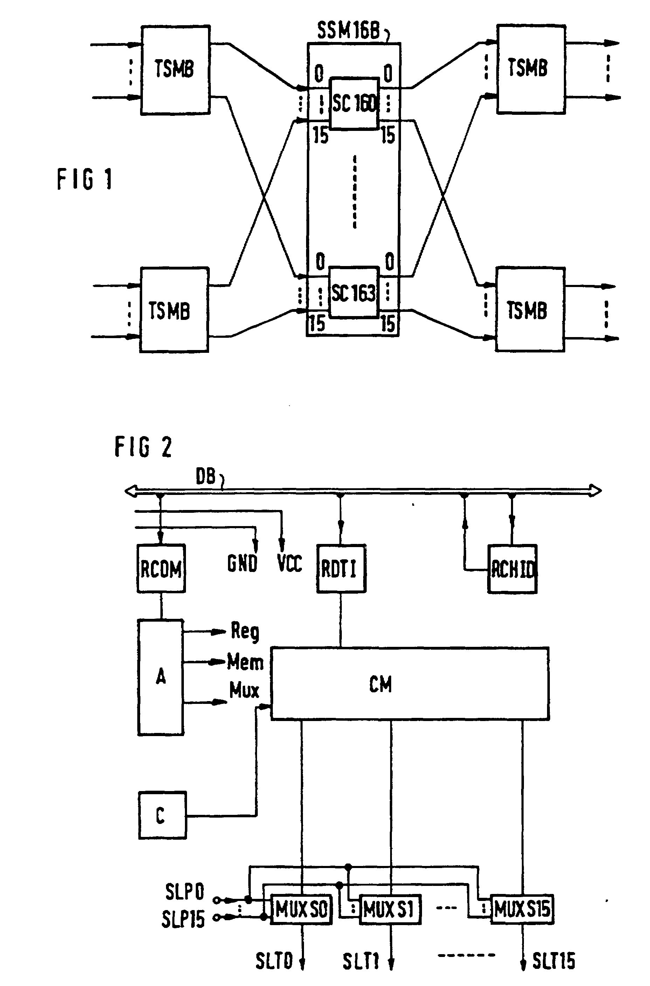

Das in Fig. 1 dargestellte Koppelnetz einer digitalen Vermittlungsstelle weist eine Mehrzahl von Zeitstufenkoppeleinheiten TSMB auf, von denen die auf der linken Seite dargestellten, der Durchschaltung von Fernmeldeinformationen in ankommender Übertragungsrichtung und die auf der rechten Seite dargestellten der Durchschaltung von Fernmeldeinformationen in abgehender Übertragungsrichtung dienen. In der Praxis sind einander entsprechende Zeitstufenkoppelelemente auf der linken und auf der rechten Seite zu einer Baueinheit vereinigt.

Das Koppelnetz gemäß Figur weist ferner einen Raumkoppelteil auf, zu dem eine Mehrzahl von Bausteinen SC160 bis SC163 gehören, die zu einer Baugruppe SSM16B vereinigt sind.

Bei den Schaltungsbausteinen SC160 bis SC163 handelt es sich um Raumstufenbausteine mit jeweils 16 Eingängen und 16 Ausgängen.

Die Baugruppe SSM16B ist zwischen den erwähnten eingangsseitigen und ausgangsseitigen Zeitstufenkoppeleinheiten TSMB angeordnet, womit ein Koppelnetz in Zeit-Raum-Zeit-Struktur gebildet ist.

Bei Koppelnetzen für größere Anschlußzahlen ist der Raumkoppelteil mehrstufig ausgebildet, wobei die einzelnen Stufen jeweils eine Mehrzahl von Baueinheiten entsprechend der Baueinheit SSM16B umfassen, die jedoch je nach Stufenzugehörigkeit eine andere Anzahl von Eingängen und Ausgängen aufweisen wie die in Figur 1 dargestellte Baueinheit SSM16B.

In der Figur 2 ist ein Schaltungsbaustein SC16 der Figur 1 mehr ins einzelne gehend, jedoch nur insoweit dargestellt, als dies zur Erläuterung des erfindungsgemäßen Verfahrens erforderlich ist.

Dieser Schaltungsbaustein stellt eine Raumstufeneinheit mit 16 Eingängen SLRO bis SLR15 und 16 Ausgängen SLT0 bis SLT15 dar. Als eigentliche Durchschalteelemente zur Verbindung dieser Eingänge und Ausgänge dienen Multiplexer MUXS0 bis MUXS15, die jeweils einem der Ausgänge SLT0 bis SLT15 individuell zugeordnet sind und deren 16 Eingänge jeweils mit gleichgeordneten Eingängen der übrigen Multiplexer verbunden sind.

Ein Koppelspeicher CM enthält in den einzelnen Zeitlagen des Multiplexsystems zugeordneten Speicherplätzen Ansteueradressen für die Multiplexer MUX0 bis MUX15, aufgrund deren diese jeweils für die Dauer einer aus 8 Takten bestehenden Zeitlage eine Verbindung eines ihrer Eingänge mit ihrem Ausgang herstellen.

Der Koppelspeicher CM wird seinerseits zyklisch durch einen Zähler C angesteuert.

Dem Koppelspeicher CM werden diese Ansteueradressen jeweils beim Aufbau einer neuen Verbindung aus einem Dateneingaberegister RDTI übergeben.

Die Abläufe des dargestellten Schaltungsbausteins werden durch eine Ablaufsteuerung gesteuert, die Register des Bausteins wie das erwähnte Register RDTI, den Speicher CM und die Multiplexer MUXS0 bis MUXS15 beeinflußt. Die entsprechenden, von einer übergeordneten Steuerung stammenden Befehle werden von der Ablaufsteuerung dazu einem Befehlsübergaberegister RCOM entnommen.

Die erwähnten Befehle und Daten werden dem Baustein über einen bidirektional betriebenen Datenbus DB zugeführt. Die Anschlüsse der Register an diesen Datenbus sowie Anschlüsse für die Spannungsversorgung, hier angedeutet durch VCC und GND, sind Bestandteil einer Schnittstelle des Bausteins, an der beim Stecken der Baueinheit, zu der der erwähnte Baustein gehört, die entsprechenden Verbindungen hergestellt werden.

Die zu Registern führenden Schnittstellenanschlüsse sind hierbei so geartet, dass, sofern ein Baustein überhaupt nicht gesteckt ist, an diesen Anschlüssen Spannungsverhältnisse herrschen, die dem Binärwert 1 digitaler Informationen entsprechen.

Eine hier außerdem gemachte Voraussetzung für den Betrieb des dargestellten Bausteins besteht darin, dass im Zuge von Resets zur Herstellung definierter Anfangszustände in den Registern in sämtlichen Positionen der Eintrag von Bits des Binärwerts 0 vorgenommen wird.

Erfindungsgemäß ist nun jedem der Schaltungsbausteine, wie er in Fig. 2 dargestellt ist, ein Identitäts- bzw. Schreib-/ Lese-Register RCHID zugeordnet, in das von dem erwähnten Bus DB aus geschrieben und aus dem über den betreffenden Bus auch gelesen werden kann, im Gegensatz zu den erwähnten, sowie weiteren nicht erwähnten Registern des Bausteins, in die nur geschrieben oder aus denen nur gelesen werden kann.

In Durchführung des erfindungsgemäßen Verfahrens werden in diese Register RCHID eine spezifische Adresse des Bausteins sowie eine spezifische Adresse der Baugruppe eingetragen, zu der der Baustein gehört, wobei entweder die Bausteinadresse oder die Baugruppenadresse vor dem Einschreiben invertiert wird.

Eine solcherart entstandene Gesamtadresse, bei der sämtliche Bits den Binärwert 1 aufweisen, muß hierbei vermieden werden.

Zur Überprüfung des ordnungsgemäßen Betriebs der einzelnen Schaltungsbausteine sowie der diese zusammenfassenden Baugruppen insbesondere zur Überprüfung der ordnungsgemäßen Anschaltung an die Schnittstelle, werden die Register RCHID über den Datenbus DB abgefragt und deren Inhalt auf Übereinstimmung mit der erwarteten Adresse überwacht.

Wird in diesem Zusammenhang ein in einem Register RCHID gespeichertes Wort, dessen sämtliche Bits den Binärwert 1 aufweisen, festgestellt, dann ist dies ein Zeichen dafür, daß der Baustein entweder defekt ist oder aber gar nicht angeschlossen, möglicherweise also gar nicht vorhanden ist.

Wird eine solche Bitkombination in den Registern RCHID sämtlicher Bausteine einer Baugruppe festgestellt, so ist dies ein Zeichen dafür, daß die gesamte Baugruppe defekt oder aber nicht ordnungsgemäß angeschlossen bzw. nicht gesteckt ist.

Wird aus einem der Register RCHID ein Datenwort ausgelesen, dessen Bits alle den Binärwert 0 aufweisen, so ist dies ein Zeichen dafür, daß es im Zuge des Betriebs zu Spannungsabsenkungen gekommen ist, die sich wie ein Reset auswirken und natürlich auch die übrigen Register des Bausteins betroffen haben, womit vom ordnungsgemäßen Betriebsablauf abweichende Verhältnisse vorliegen, auf die entsprechend reagiert werden muß.

Das Auftreten einer sonstigen Adresse, die jedoch nicht der erwarteten Adresse entspricht, ist ebenfalls ein Indiz für eine nicht ordnungsgemäße Anschaltung des Schaltungsbausteins.

Durch Überwachung des Auftretens von solchen ausschließlich den Binärwert 0 aufweisenden Datenwörtern in den Registern RCHID kann auch das ordnungsgemäße Arbeiten der Resetfunktion überprüft werden.

## Patentansprüche

1. Verfahren zur Überprüfung der ordnungsgemäßen Anschaltung integrierter Schaltungsbausteine sowie von jeweils eine Mehrzahl solcher Schaltungsbausteine zusammenfassenden Baugruppen an eine Schnittstelle, zu der ein Datenbus (DB), über den für Bestandteile der Bausteine und Baugruppen bestimmte Adressen, Daten und Befehle geschrieben und gelesen werden können, sowie Anschlüsse für die Spannungsversorgung gehören,
wobei in an dem Datenbus (DB) angeschlossene bausteinindividuelle Schreib-/Lese-Register (RCHID), die bei zur Herbeiführung von definierten Anfangsbetriebszuständen vorgenommenen Bertriebsspannungsabsentungen mit Bits des einen Binärwerts (0) beschrieben werden, und an deren Schnittstellenanschlüssen bei fehlender Anschaltung des jeweils zugehörigen Bausteins Bits des anderen Binärwerts (1) entsprechende Spannungsverhältnisse herrschen, Adressen der jeweiligen Baugruppe (SSM16B) und Adressen des jeweiligen Bausteins (SC16) geschrieben werden
und wobei die Inhalte der betreffenden Schreib-/Lese-Register (RCHID) abgefragt und auf Übereinstimmung mit der jeweils erwarteten Adresse bzw. auf das Auftreten von ausschließlich Bits desselben Binärwerts (0, 1) überwacht werden,
**dadurch gekennzeichnet,**
**dass** in die genannten Schreib-/Lese-Register (RCHID) das Einschreiben einer der beiden genannten, jeweils eine Gesamtadresse bildenden, Adressen in invertierter Form geschieht und dabei die Bereitstellung einer solchen, lediglich aus Bits des genannten anderen Binärwerts (1) bestehenden Gesamtadresse vermieden wird.

## Claims

1. Method for checking the correct connection of integrated circuit chips, and also of assemblies combining a respective plurality of such circuit chips, to an interface having an associated data bus (DB), which can be used for writing and reading addresses, data and instructions intended for components of the chips and assemblies, and also associated connections for the voltage supply,
where addresses for the respective assembly (SSM16B) and addresses for the respective chip (SC16) are written to read/write registers (RCHID) for the individual chips, which registers are connected to the data bus (DB) and, in the event of operating voltage reductions made in order to bring about defined initial operating states, have bits with the one binary value (0) written to them, and at whose interface connections voltage conditions corresponding to bits with the other binary value (1) prevail in the event of the respectively associated chip not being connected,
and where the contents of the relevant read/write registers (RCHID) are requested and are monitored for a match with the respectively expected address or for the occurrence of nothing but bits with the same binary value (0, 1),
**characterized**
**in that** one of the two aforementioned addresses, each forming a total address, is written to the aforementioned read/write registers (RCHID) in inverted form, and in this context the provision of such a total address comprising only bits with the aforementioned other binary value (1) is prevented.

## Revendications

1. Procédé destiné à la vérification du raccordement correct de modules de circuits intégrés, ainsi que de cartes électroniques, qui comprennent chacune une pluralité de tels modules de circuits, au niveau d'une interface dont font partie un bus de données (DB), par l'intermédiaire duquel on peut écrire et lire des adresses, des données et des instructions destinées à des composants des modules et des cartes électroniques, ainsi que des raccordements pour l'alimentation en tension, alors que, dans des registres à écriture et lecture (RCHID), propres aux modules et raccordés au bus de données (DB), dans lesquels sont écrits, lors de baisses de tension de service effectuées pour assigner des états initiaux de service bien définis, des bits de l'une des valeurs binaires (0) et aux bornes, au niveau de l'interface, desquels règnent, en cas de raccordement défectueux du module réciproque, des conditions de tension correspondant aux bits de l'autre valeur binaire (1), sont écrites des adresses de la carte électronique respective (SSM16B) et des adresses du module respectif (SC16) et,
les contenus des registres à écriture et lecture (RCHID) étant interrogés et contrôlés quant à leur concordance avec l'adresse escomptée dans chaque cas et/ou quant à la présence exclusive de bits de la même valeur binaire (0, 1),
**caractérisé par le fait**
**que**, dans les dits registres à écriture et lecture (RCHID), l'inscription de l'une des deux dites adresses, formant dans chaque cas une adresse complète, se fait sous forme inversée et qu'en même temps, on évite la mise en place d'une telle adresse complète composée seulement de bits de la dite autre valeur binaire (1).
